# FASCICULE DE BREVET EUROPEEN

(11) **EP 2 767 440 B1**
(45) Date de publication et mention de la délivrance du brevet: **28.10.2015**
(21) Numéro de dépôt: 14154943.6
(22) Date de dépôt: 13.02.2014
(51) Int. Cl.: B60R 11/04

(54) **Dispositif de protection d'une caméra pour véhicule routier de transport de marchandises**
Schutzvorrichtung einer Kamera für Straßentransportfahrzeug für Waren
Device for protecting a camera for a road vehicle for transporting goods

(30) Priorité: 19.02.2013 FR 1351389
(43) Date de publication de la demande: 20.08.2014
(73) Titulaire: Jean Chereau SAS, 50220 Ducey (FR)
(72) Inventeur: Chaillou, Frédéric, 35133 St Sauveur des Landes (FR); Courteille, Benoit, 50300 AVRANCHES (FR)
(74) Mandataire: Casalonga

(56) Documents cités:
- WO-A1-2009/037819
- JP-A- H09 202 181
- JP-A- 2010 171 499
- US-A1- 2008 173 816

## Description

La présente invention concerne le domaine des moyens de prises de vues pour véhicule destinés à réduire les angles morts, c'est-à-dire les champs de vision inaccessibles pour le conducteur du véhicule.

Plus particulièrement, la présente invention concerne un dispositif de protection d'un moyen de prises de vues pour carrosserie destinée à être montée sur le châssis d'un véhicule routier de transport de marchandises tel qu'un camion, une semi-remorque, une remorque ou un porteur. La carrosserie peut par exemple être une carrosserie frigorifique. Le document WO 2009/037819 A1 décrit un dispositif de protection selon le préambule de la revendication 1.

De tels moyens de prises de vue sont généralement nommés systèmes de vision indirecte et sont constitués par exemple par des caméras.

Un véhicule routier de transport de marchandises peut être équipé de caméras fixées sur les flancs verticaux opposés et sur la face arrière de la carrosserie ainsi qu'à l'avant de la cabine du véhicule pour permettre des prises de vues sur le pourtour du véhicule. Les caméras sont associées à un moniteur ou écran de contrôle situé à l'intérieur de la cabine. Cet écran permet au conducteur de s'assurer, par exemple lors de manoeuvres, de l'absence d'objets ou d'autres usagers de la route dans les angles morts.

Les caméras latérales fixées sur les flancs verticaux de la carrosserie permettent d'observer les bas côtés de la route latéralement de part et d'autre du véhicule. Dans ce but, ces caméras sont en saillie par rapport aux flancs verticaux de la carrosserie. Les caméras latérales sont donc particulièrement exposées aux chocs lors du roulage de véhicule ou lors de manoeuvres, par exemple contre des panneaux de signalisation ou d'affichage, des bâtiments, des arbres, etc. De tels chocs peuvent provoquer la destruction des caméras, voire un endommagement des flancs verticaux de la carrosserie.

La présente invention vise à remédier à ces inconvénients.

Plus particulièrement, la présente invention vise à prévoir un dispositif permettant de protéger un moyen de prises de vues pour carrosserie de véhicule routier de transport de marchandises.

La présente invention vise également à prévoir un dispositif de protection particulièrement facile à fabriquer, à monter et économique.

Le dispositif de protection d'un moyen de prises de vues pour carrosserie de véhicule routier de transport de marchandises selon l'invention comprend les caractéristiques de la revendication 1.

La prévision dune forme concave pour ladite face déflectrice permet de faciliter le glissement d'objets extérieurs au dispositif le long de la protubérance du carénage. En outre, en cas de forme concave, la progressivité de la pente de la face déflectrice est augmentée et on limite encore les efforts engendrés par le frottement des objets extérieurs.

Dans un mode de réalisation, la face intérieure de l'embase de fixation est plane et ladite pente de la face déflectrice extérieure est inclinée par rapport à la face intérieure.

La face déflectrice extérieure peut avantageusement se raccorder à la face extérieure de l'embase de fixation, notamment tangentiellement. La face déflectrice extérieure peut se raccorder à la face extérieure au voisinage d'un des bords d'extrémité latéraux délimitant la face extérieure de l'embase de fixation.

Dans un mode de réalisation, la protubérance comprend deux faces déflectrices extérieures disposées longitudinalement de part et d'autre d'une partie distale de ladite protubérance. Les faces déflectrices peuvent être symétriques l'une par rapport à l'autre en considérant un plan vertical passant par ladite partie distale. De préférence, la protubérance délimite au moins en partie un logement à l'intérieur duquel est destiné à être logé le moyen de prises de vues.

Dans un autre mode de réalisation, la protubérance comprend une unique face déflectrice qui est prolongée, au niveau d'une partie distale, par un des bords d'extrémité latéraux délimitant la face extérieure de l'embase de fixation, ledit bord étant dimensionné pour s'étendre latéralement au-delà du moyen de prises de vues et destiné à être longitudinalement en regard dudit moyen.

Le carénage peut avantageusement être réalisé dans une matière métallique, notamment en acier ou en aluminium.

L'invention concerne également une carrosserie pour véhicule routier de transport de marchandises comprenant des flancs verticaux, un plancher et un plafond délimitant un espace intérieur, une pièce de finition fixée à l'extrémité supérieure de chaque flanc vertical, au moins un moyen de prises de vues et au moins un dispositif de protection fixés sur la pièce de finition du flanc vertical associé ou fixés entre deux profilés successifs de la pièce de finition sur le flanc vertical associé.

La présente invention sera mieux comprise à l'étude de la description détaillée de modes de réalisation pris à titre d'exemples nullement limitatifs et illustrés par les dessins annexés, sur lesquels :
- la figure 1 est une vue de côté d'un véhicule routier selon un premier exemple de réalisation,
- la figure 2 est une vue de détail de la figure 1 illustrant un dispositif de protection d'une caméra du véhicule,
- les figures 3 et 4 sont des vues partielles de dessus et de l'arrière du véhicule de la figure 1 illustrant le dispositif de protection,
- la figure 5 est une vue de face du dispositif de protection des figures 2 à 4,
- les figures 6 et 7 sont des vues en coupe selon les axes VI-VI et VII-VII de la figure 5,
- la figure 8 est une vue partielle de côté d'un véhicule routier comprenant un dispositif de protection d'une caméra selon un second exemple de réalisation,
- la figure 9 est une vue partielle de dessus du véhicule de la figure 8 illustrant le dispositif de protection, et
- la figure 10 est une vue en coupe du dispositif de protection des figures 8 et 9.

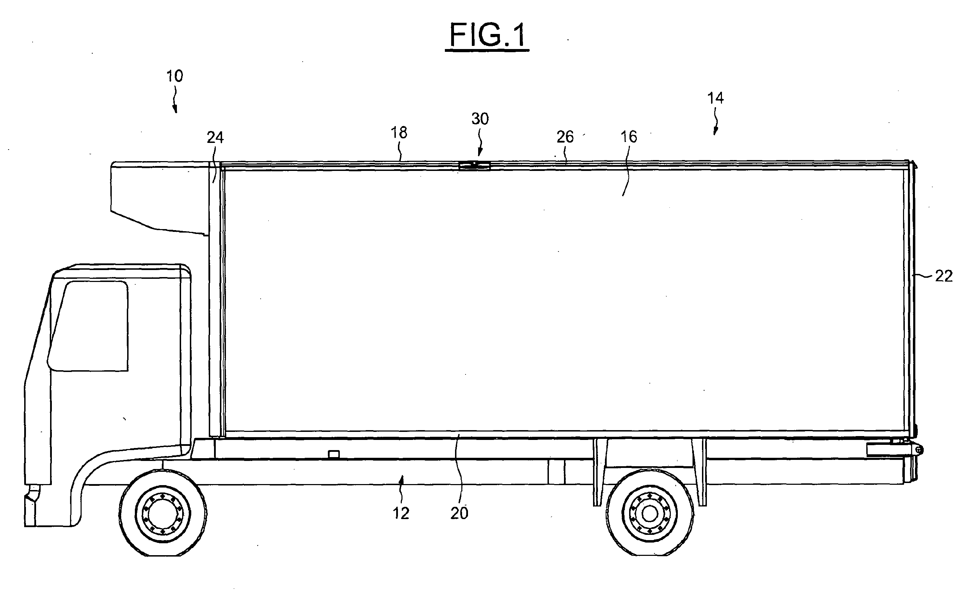

Sur la figure 1, on a représenté un véhicule 10 de transport routier comprenant un châssis 12 s'étendant longitudinalement et soutenu par des roues et une carrosserie 14 montée sur le châssis.

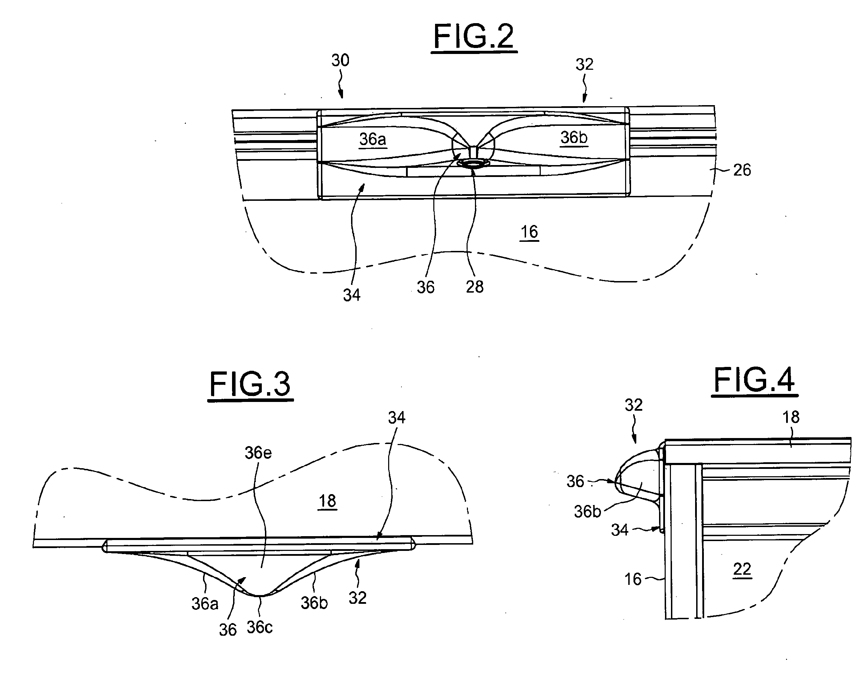

Comme cela est illustré sur les figures 1 à 4, la carrosserie 14 comprend deux flancs 16 verticaux opposés s'étendant longitudinalement, un plafond 18, un plancher 20, une face arrière 22 et une face avant 24 assemblés entre eux pour délimiter un espace de chargement intérieur. La carrosserie 10 comprend également, au niveau de l'extrémité supérieure de chaque flanc 16, une ceinture ou pièce de finition 26 sur laquelle sont montés une caméra 28 latérale et un dispositif 30 de protection associé.

La caméra 28 est fixée sur la pièce de finition 26 en étant en saillie par rapport au flanc 16 associé pour réaliser des prises de vues vers le bas. L'objectif de la caméra 28 est orienté vers le sol. La caméra 28 est orientée selon un axe vertical avec un angle fixe et permet de délivrer des images du bas côté de la route. La caméra 28 peut comprendre une coque extérieure de forme générale arrondie qui est fixée à la pièce de finition 26 et à l'intérieur de laquelle sont disposés l'ensemble des moyens optiques permettant les prises de vues. Le véhicule 10 peut également comprendre des caméras (non représentées) fixées sur la face arrière 22 de la carrosserie et à l'avant de la cabine.

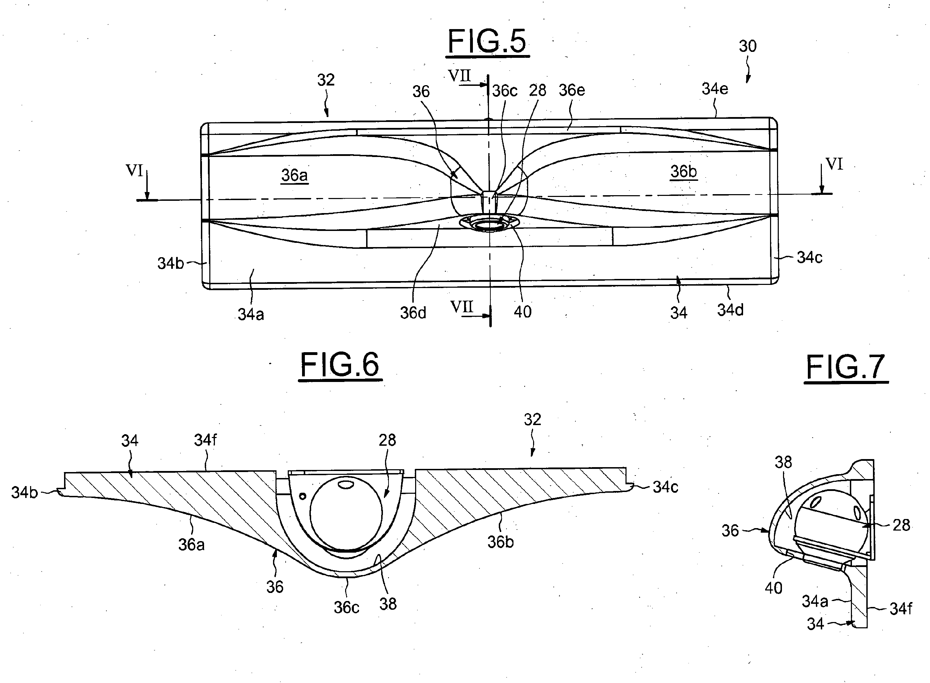

Comme illustré plus visiblement aux figures 5 à 7, le dispositif 30 est constitué par un carénage 32 de protection recouvrant la caméra 28 latérale associée. Le carénage 32 est distinct de la caméra 28 et de sa coque de protection. Le carénage 32 est avantageusement réalisé en une seule pièce, par exemple dans une matière métallique, notamment en acier ou en aluminium. Le carénage 32 peut par exemple être obtenu par emboutissage ou par moulage.

Le carénage 32 de protection comprend une embase 34 de fixation prévue pour venir se fixer sur la pièce de finition du flanc vertical associé, et une protubérance 36 faisant saillie par rapport à ladite embase. Dans la position montée, l'embase 34 de fixation s'étend longitudinalement et la protubérance 36 est en saillie latéralement vers l'extérieur par rapport à ladite embase. La dimension verticale de l'embase 34 de fixation est égale à celle de la pièce de finition du flanc.

L'embase 34 de fixation comprend une face extérieure 34a plane frontale s'étendant longitudinalement et qui est délimitée dans le sens longitudinal par deux bords d'extrémité 34b, 34c latéraux opposés et dans le sens vertical par deux bords d'extrémité 34d, 34e longitudinaux opposés. Dans la position montée, les bords 34b, 34c de l'embase s'étendent verticalement et les bords 34d, 34e s'étendent horizontalement et forment des bords inférieur et supérieur. L'embase 34 de fixation comprend également une face intérieure 34f frontale opposée à la face extérieure 34a dans le sens transversal et s'étendant longitudinalement. La face intérieure 34f est prévue pour être orientée du côté de la carrosserie et pour venir en appui contre la pièce de finition du flanc. Dans l'exemple de réalisation illustré, la face intérieure 34f est plane.

La protubérance 36 est formée sur la face extérieure 34a de l'embase et s'étend longitudinalement sur ladite face. La protubérance 36 fait saillie latéralement par rapport à la face extérieure 34a du côté opposé à la face intérieure 34f. L'embase 34 de fixation et la protubérance 36 délimitent un logement 38 concave à l'intérieur duquel est montée la caméra 28. Le logement 38 débouche au niveau de la face intérieure 34f de l'embase pour permettre le montage du carénage 32 autour de la caméra. Il n'existe aucun contact direct entre la caméra 28 et le logement 38. La dimension latérale de la protubérance 36 est supérieure à celle de la caméra 28. La protubérance 36 s'étend latéralement au-delà de la caméra 28.

La protubérance 36 comprend deux faces déflectrices 36a, 36b extérieures qui se rejoignent au niveau d'une partie distale 36c de ladite protubérance. Les faces déflectrices 36a, 36b sont symétriques l'une par rapport à l'autre en considérant un plan vertical médian de la protubérance passant par la partie distale 36c. La face déflectrice 36a, respectivement 36b, s'étend longitudinalement de la partie distale 36c jusqu'au voisinage du bord d'extrémité 34b latéral, respectivement 34c, de l'embase en se raccordant tangentiellement à la face extérieure 34a dans le sens longitudinal. La face déflectrice 36a, respectivement 36b, présente une forme concave présentant en tout point une pente dirigée vers le bord d'extrémité 34b latéral, respectivement 34c, et inclinée par rapport aux faces intérieure 34f et extérieure 34a de l'embase. La face intérieure 34f s'étend selon un axe d'allongement longitudinal. La forme concave de la face déflectrice 36a, respectivement 36b, présente en tout point une pente inclinée par rapport à l'axe d'allongement longitudinal de la face intérieure 34f.

Dans une variante de réalisation, il pourrait être possible de prévoir une face déflectrice 36a, respectivement 36b, plane inclinée avec une pente constante par rapport aux faces intérieure 34f et extérieure 34a de l'embase.

La protubérance 36 est délimitée verticalement par deux faces planes 36d inférieure et 36e supérieure se raccordant à la face extérieure 34a de l'embout. Un orifice 40 traversant est ménagé dans l'épaisseur de la face 36d inférieure et débouche au niveau du logement 38 à l'intérieur duquel est disposée la caméra 28. L'orifice 40 permet les prises de vues par la caméra 28 du bas côté de la route.

Lors d'un déplacement du véhicule vers l'avant, si un objet extérieur vient glisser longitudinalement le long de la face déflectrice 36a du carénage, ladite face déflectrice va modifier l'orientation de l'effort appliqué par ledit objet sur le carénage qui va passer d'une orientation longitudinale à une orientation inclinée par rapport au flanc vertical associé de la carrosserie. Si l'objet percuté est plus rigide que les suspensions du véhicule, l'effort appliqué sur le flanc est transmis jusqu'à ces suspensions pour y être absorbé. Au contraire, si l'objet percuté est plus souple que les suspensions, ledit objet va alors être dévié latéralement vers l'extérieur. Dans les deux cas, le carénage 32 forme un obstacle recouvrant la caméra 28 et permet d'obtenir une protection contre les chocs. La face déflectrice 36a du carénage permet d'obtenir une protection de la caméra 28 lors d'un déplacement du véhicule vers l'avant et la face déflectrice 36b est prévue pour la protection de la caméra lors d'un recul. Par ailleurs, le logement 38 formé sur le carénage 32 permet de protéger la caméra par rapport aux éventuelles projections d'eau, de boues et de poussières.

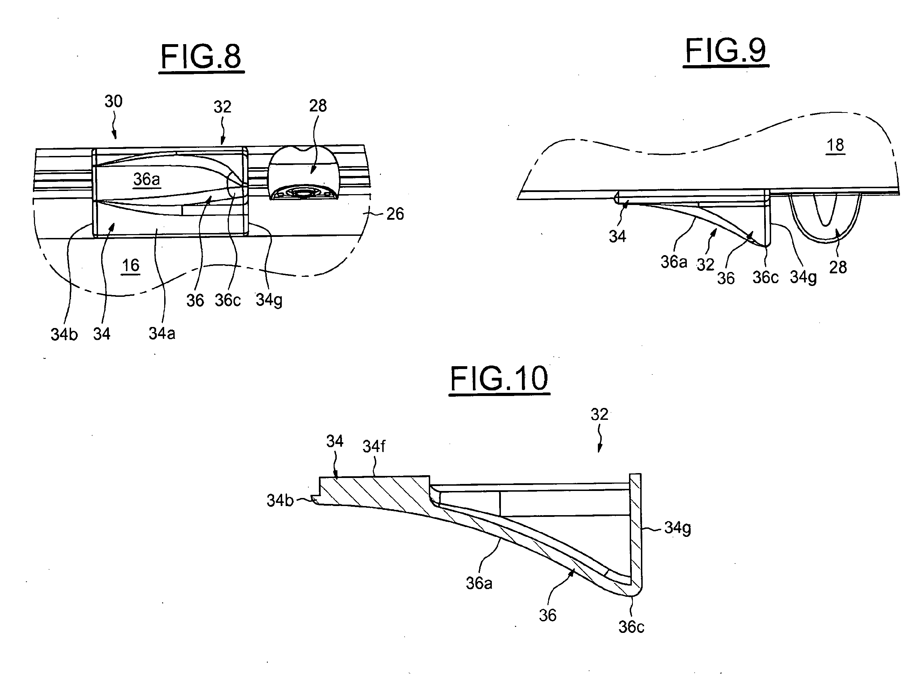

L'exemple de réalisation illustré aux figures 8 à 10, sur lesquelles les éléments identiques portent les mêmes références, diffère en ce que la protubérance 36 du carénage comprend uniquement la face déflectrice 36a qui est prolongée, au niveau de la partie distale 36c, par un bord d'extrémité 34g latéral délimitant longitudinalement la face extérieure 34a de l'embase de fixation. Le bord d'extrémité 34g est opposé au bord d'extrémité 34b et se raccorde à la face intérieure 34f de l'embase. Le bord d'extrémité latéral 34g présente une dimension latérale supérieure à celle de la caméra 28. Dans cet exemple de réalisation, le carénage 32 est décalé longitudinalement vers l'avant par rapport à la caméra 28. Le bord d'extrémité 34g latéral de la protubérance est en regard de la caméra 28 et s'étend latéralement au-delà de celle-ci. La face déflectrice 36a de la protubérance permet d'obtenir une protection de la caméra lors d'un déplacement vers l'avant du véhicule.

Dans le second exemple de réalisation décrit, la protubérance 36 du dispositif de protection présente une paroi d'épaisseur constante. Il pourrait également être possible de prévoir une telle épaisseur constante pour la paroi de la protubérance dans le premier exemple de réalisation.

Dans les deux exemples de réalisation illustrés, la caméra 28 et le dispositif 30 de protection sont fixés sur la pièce de finition 26, elle-même fixée sur le flanc vertical de la carrosserie. Dans une variante de réalisation, la caméra 28 et le dispositif 30 peuvent être fixés directement sur le flanc vertical de la carrosserie et montés entre deux profilés de la pièce de finition de forme identique et espacés l'un de l'autre dans le sens longitudinal. Le dispositif 30 de protection forme alors un prolongement des profilés de la pièce de finition.

Grâce à l'invention, on dispose d'un dispositif de protection pour une caméra latérale comprenant une protubérance ayant au moins une face déflectrice formant rampe de sorte à protéger la caméra contre les chocs lors du déplacement du véhicule.

## Revendications

1. Dispositif de protection d'un moyen de prises de vues pour carrosserie de véhicule routier de transport de marchandises, comprenant un carénage (30) destiné à être fixé sur la carrosserie et pourvu d'une embase (34) de fixation comprenant une face intérieure (34f) destinée à être orientée du côté de la carrosserie et une face extérieure (34a) opposée délimitée longitudinalement par deux bords d'extrémité (34b, 34c ; 34b, 34g) latéraux opposés, et d'une protubérance (36) en saillie par rapport à ladite face extérieure et apte à protéger contre les chocs le moyen de prises de vues lors du déplacement du véhicule selon au moins un sens de déplacement, la protubérance comprenant au moins une face déflectrice (36a) extérieure présentant au moins une pente dirigée vers un des bords d'extrémité (34b, 34c; 34b, 34g) latéraux délimitant la face extérieure de l'embase de fixation, dispositif **caractérisé en ce que** la face déflectrice est de forme concave.

2. Dispositif selon la revendication 1, dans lequel la face intérieure (34f) de l'embase de fixation est plane, ladite pente de la face déflectrice (36a) extérieure étant inclinée par rapport à la face intérieure (34f).

3. Dispositif selon la revendication 1 ou 2, dans lequel la face déflectrice (36a) extérieure se raccorde à la face extérieure (34a) de l'embase de fixation.

4. Dispositif selon la revendication 3, dans lequel la face déflectrice (36a) extérieure se raccorde à la face extérieure (34a) au voisinage d'un des bords d'extrémité (34b, 34c; 34b, 34g) latéraux délimitant la face extérieure de l'embase de fixation.

5. Dispositif selon la revendication 3 ou 4, dans lequel la face déflectrice (36a) extérieure se raccorde tangentiellement à la face extérieure (34a) de l'embase de fixation.

6. Dispositif selon l'une quelconque des revendications précédentes, dans lequel la protubérance (36) comprend deux faces déflectrices (36a, 36b) extérieures disposées longitudinalement de part et d'autre d'une partie distale (36c) de ladite protubérance.

7. Dispositif selon la revendication 6, dans lequel les faces déflectrices sont symétriques l'une par rapport à l'autre en considérant un plan vertical passant par ladite partie distale.

8. Dispositif selon l'une quelconque des revendications précédentes, dans lequel la protubérance (36) délimite au moins en partie un logement (38) à l'intérieur duquel est destiné à être logé le moyen de prises de vues.

9. Dispositif selon l'une quelconque des revendications 1 à 5, dans lequel la protubérance comprend une unique face déflectrice (36a) qui est prolongée, au niveau d'une partie distale (36c), par un des bords d'extrémité (34g) latéraux délimitant la face extérieure de l'embase de fixation, ledit bord étant dimensionné pour s'étendre latéralement au-delà du moyen de prises de vues et destiné à être longitudinalement en regard dudit moyen.

10. Dispositif selon l'une quelconque des revendications précédentes, dans lequel le carénage (30) est réalisé dans une matière métallique, notamment en acier ou en aluminium.

11. Carrosserie pour véhicule routier de transport de marchandises comprenant des flancs (16) verticaux, un plafond (18) et un plancher (20) délimitant un espace intérieur, une pièce de finition (26) fixée à l'extrémité supérieure de chaque flanc vertical, au moins un moyen (28) de prises de vues et au moins un dispositif de protection selon l'une quelconque des revendications précédentes, le moyen de prises de vues et le dispositif de protection étant fixés sur la pièce de finition du flanc vertical associé ou fixés entre deux profilés successifs de la pièce de finition sur le flanc vertical associé.

## Patentansprüche

1. Schutzvorrichtung eines Bildaufnahmemittels für die Karosserie von Straßenfahrzeugen für den Warentransport, umfassend eine Verkleidung (30) zur Befestigung an der Karosserie, die mit einem Befestigungssockel (34), der eine Innenfläche (34f), die dazu bestimmt ist, in Richtung Karosserie zu zeigen, und eine gegenüberliegende Außenfläche (34a) umfasst, die in ihrer Länge durch zwei einander gegenüberliegende Seitenendränder (34b, 34c; 34b, 34g) begrenzt ist, und mit einer Ausstülpung (36) versehen ist, die bezüglich der Außenfläche herausragt und geeignet ist, das Bildaufnahmemittel bei einer Bewegung des Fahrzeug in wenigstens eine Bewegungsrichtung gegen Stöße zu schützen, wobei die Ausstülpung wenigstens eine äußere Ablenkfläche (36a) mit wenigstens einer zu einem der die Außenfläche des Befestigungssockels begrenzenden Seitenendränder (34b, 34c; 34b, 34g) hin geneigten Fläche umfasst, **dadurch gekennzeichnet, dass** die Ablenkfläche eine konkave Form aufweist.

2. Vorrichtung nach Anspruch 1, wobei Innenfläche (34f) des Befestigungssockels eben ist, wobei die Neigung der äußeren Ablenkfläche (36a) gegenüber der Innenfläche (34f) geneigt ist.

3. Vorrichtung nach Anspruch 1 oder 2, wobei die äußere Ablenkfläche (36a) mit der Außenfläche (34a) des Befestigungssockels verbunden ist.

4. Vorrichtung nach Anspruch 3, wobei die äußere Ablenkfläche (36a) angrenzend an einen der die Außenfläche des Befestigungssockels begrenzenden Seitenendränder (34b, 34c; 34b, 34g) mit der Außenfläche (34a) verbunden ist.

5. Vorrichtung nach Anspruch 3 oder 4, wobei die äußere Ablenkfläche (36a) tangential mit der Außenfläche (34a) des Befestigungssockels verbunden ist.

6. Vorrichtung nach einem der vorhergehenden Ansprüche, wobei die Ausstülpung (36) zwei äußere Ablenkflächen (36a, 36b) umfasst, die auf beiden Seiten eines distalen Teils (36c) der Ausstülpung in Längsrichtung angeordnet sind.

7. Vorrichtung nach Anspruch 6, wobei die Ablenkflächen bei Betrachtung einer durch den distalen Teil gehenden vertikalen Ebene zueinander symmetrisch sind.

8. Vorrichtung nach einem der vorhergehenden Ansprüche, wobei die Ausstülpung (36) wenigstens teilweise eine Aufnahme (38) umgrenzt, deren Inneres zur Aufnahme des Bildaufnahmemittels vorgesehen ist.

9. Vorrichtung nach einem der Ansprüche 1 bis 5, wobei die Ausstülpung eine einzige Ablenkfläche (36a) umfasst, die an einem distalen Teil (36c) durch einen der die Außenfläche des Befestigungssockels begrenzenden Seitenendränder (34g) verlängert ist, wobei der Rand so bemessen ist, dass er sich seitlich über das Bildaufnahmemittel hinaus erstreckt, und bestimmt ist, in Längstichtung gegenüber dem mittel zu verlaufen.

10. Vorrichtung nach einem der vorhergehenden Ansprüche, wobei die Verkleidung (30) aus einem metallischen Material, insbesondere Stahl oder Aluminium, hergestellt ist.

11. Karosserie für Straßenfahrzeuge für den Warentransport, umfassend vertikale Seiten (16), eine Decke (18) und einen Boden (20), die einen Innenraum begrenzen, ein am oberen Ende jeder vertikalen Seite befestigtes Applikationsteil (26), wenigstens ein Bildaufnahmemittel (28) und wenigstens eine Schutzvorrichtung nach einem der vorhergehenden Ansprüche, wobei das Bildaufnahmemittel und die Schutzvorrichtung an dem Applikationsteil der zugeordneten vertikalen Seite befestigt sind oder zwischen zwei aufeinanderfolgenden Profilen des Applikationsteils auf der zugeordneten vertikalen Seite befestigt sind.

## Claims

1. Device for protecting an imaging means for a goods-transporting road vehicle body, comprising a fairing (30) intended to be fixed to the body and provided with a fixing base (34) comprising an inner face (34f) intended to be oriented on the body side and an opposite outer face (34a) delimited longitudinally by two opposite lateral end edges (34b, 34c; 34b, 34g), and with a protuberance (36) projecting with respect to the said outer face and able to protect the imaging means against impacts during the movement of the vehicle in at least one direction of movement, the protuberance comprising at least one outer deflecting face (36a) having at least one slope directed towards one of the lateral end edges (34b, 34c; 34b, 34g) delimiting the outer face of the fixing base, which device is **characterized in that** the deflecting face is of concave shape.

2. Device according to Claim 1, in which the inner face (34f) of the fixing base is planar, the said slope of the outer deflecting face (36a) being inclined with respect to the inner face (34f).

3. Device according to Claim 1 or 2, in which the outer deflecting face (36a) is connected to the outer face (34a) of the fixing base.

4. Device according to Claim 3, in which the outer deflecting face (36a) is connected to the outer face (34a) in the vicinity of one of the lateral end edges (34b, 34c; 34b, 34g) delimiting the outer face of the fixing base.

5. Device according to Claim 3 or 4, in which the outer deflecting face (36a) is connected tangentially to the outer face (34a) of the fixing base.

6. Device according to any one of the preceding claims, in which the protuberance (36) comprises two outer deflecting faces (36a, 36b) arranged longitudinally on either side of a distal part (36c) of the said protuberance.

7. Device according to Claim 6, in which the deflecting faces are symmetrical to one another considering a vertical plane passing through the said distal part.

8. Device according to any one of the preceding claims, in which the protuberance (36) at least partially delimits a housing (38) inside which the imaging means is intended to be housed.

9. Device according to any one of Claims 1 to 5, in which the protuberance comprises a single deflecting face (36a) which is extended, at a distal part (36c), by one of the lateral end edges (34g) delimiting the outer face of the fixing base, the said edge being dimensioned to extend laterally beyond the imaging means and intended to face the said means longitudinally.

10. Device according to any one of the preceding claims, in which the fairing (30) is made from a metallic material, in particular steel or aluminium.

11. Body for a goods-transporting road vehicle comprising vertical side walls (16), a roof (18) and a floor (20) delimiting an interior space, a finishing part (26) fixed to the upper end of each vertical side wall, at least one imaging means (28) and at least one protection device according to any one of the preceding claims, the imaging means and the protection device being fixed to the finishing part of the associated vertical side wall or being fixed between two successive profiles of the finishing part to the associated vertical side wall.
